# EUROPÄISCHE PATENTSCHRIFT

(11) **EP 2 807 728 B1**
(45) Veröffentlichungstag und Bekanntmachung des Hinweises auf die Patenterteilung: **28.09.2016**
(21) Anmeldenummer: 13702394.1
(22) Anmeldetag: 23.01.2013
(51) Int. Cl.: H02K 3/52, H02K 3/487

(54) **ROTOR FÜR EINE ROTIERENDE ELEKTRISCHE MASCHINE**
ROTOR FOR A ROTATING ELECTRIC MACHINE
ROTOR POUR MACHINE ÉLECTRIQUE TOURNANTE

(30) Priorität: 26.01.2012 DE 202012000842 U; 16.02.2012 DE 202012003120 U
(43) Veröffentlichungstag der Anmeldung: 03.12.2014
(73) Patentinhaber: Continental Automotive GmbH, 30165 Hannover (DE)
(72) Erfinder: BULATOW, Michael, 10553 Berlin (DE); WELKE, Knut, 73235 Weilheim an der Teck (DE)
(86) Internationale Anmeldenummer: PCT/EP2013/051235
(87) Internationale Veröffentlichungsnummer: WO 2013/110656

(56) Entgegenhaltungen:
- EP-A2- 0 379 012
- CH-A5- 620 060
- DE-A1- 10 244 201
- US-A- 5 973 432

## Beschreibung

Die vorliegende Erfindung betrifft einen Rotor für eine rotierende elektrische Maschine, insbesondere für einen Elektromotor oder einen Generator. Zudem wird ein Verfahren zur Herstellung eines solchen Rotors offenbart.

In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise als Startergeneratoren oder Achsmotoren eingesetzt. Dabei kommen zum Teil fremderregte Synchronmaschinen zum Einsatz, die einen Rotor aus einem mit einer Erregerwicklung versehenen Blechpaket aufweisen. Bei derartigen Rotoren sind zwischen den bewickelten Polzähnen Nuten gebildet.

Die Druckschrift US 5 973 432 A offenbart einen Rotor mit Nuten, die zwischen Polzähnen des Rotors gebildet sind, und Nutkeilen, die in den Nuten angeordnet sind und zum Fixieren von Rotorkomponenten dienen.

Weitere Druckschriften DE 102 44 201 A1, EP 0 379 012 A2 und CH 620 060 A5 offenbaren jeweils einen Stator mit Keilen zum Fixieren von Statorkomponenten.

Im Betrieb treten sowohl bei Innen- als auch bei Außenläufern hohe Fliehkräfte auf, die die Erregerwicklung aus den Nuten ziehen können. Die Fliehkräfte sind von der Drehzahl und von dem Gewicht der Nutinnenkomponenten abhängig. Insbesondere bei hochdrehenden Maschinen wird die Wicklung daher nach der Montage zusätzlich gesichert. Dazu sind verschiedene Bindemittel bekannt, die als Tränkharze oder Vergussmassen eingesetzt werden.

Zusätzlich können Nutstopper oder Nutkeile eingesetzt werden, um ein Herausziehen der Wicklung aus der Nut zu verhindern. Derartige Nutkeile sind beispielsweise aus der Druckschrift DE 28 17 951 A1 bekannt. Bei für Elektromotoren mit hoher Drehzahl (10 000 Umdrehungen pro Minute und mehr) ausgelegten Rotoren wäre es sinnvoll, die Nutinnenkomponenten, insbesondere die Erregerwicklung, noch wirksamer gegen im Betrieb auftretende Fliehkräfte zu sichern.

Aufgabe der Erfindung ist es daher, einen Rotor für eine rotierende elektrische Maschine anzugeben, dessen Erregerwicklung derart gegen Fliehkräfte fixiert ist, dass der Rotor auch für hohe Drehzahlen einsetzbar ist.

Erfindungsgemäß wird ein Rotor für eine rotierende elektrische Maschine angegeben, der eine Anzahl von eine Erregerwicklung tragenden Polzähnen aufweist. Zwischen den Polzähnen sind jeweils Nuten gebildet und in den Nuten sind Nutkeile vorgesehen. Die Nutkeile weisen eine konkave Form mit einer zum Innern des Rotors gerichteten Aufwölbung auf. Zwischen zumindest einem Ende der Nutkeile und angrenzenden Rotorkomponenten ist eine Dichtung in Form eines Dichtstopfens vorgesehen. Dabei weist der Dichtstopfen flexible Lamellen auf.

Ein derartiger Rotor ist auch für hohe Drehzahlen von 10 000 Umdrehungen pro Minute und mehr geeignet. Ein derartig geformter Nutkeil sichert die Nutinnenkomponenten besonders gut, da bei einem konkav gewölbten Nutkeil die Fliehkräfte besser abgeleitet werden können. Durch die Lamellen werden die Montage- und Fertigungstoleranzen aller Bauteile im Dichtbereich ausgeglichen.

In einer Ausführungsform weisen die Nutkeile einen konstanten Krümmungsradius auf. Sie bilden somit im Querschnitt einen Kreisbogen aus.

In einer Ausführungsform sind die Nutkeile in den Polzähnen formstabil festgeklemmt. Dazu sind in den Polzähnen Ausnehmungen als Halterungen vorgesehen, die entsprechend der Form der Nutkeile geformt sein können und die Randabschnitte der Nutkeile aufnehmen. Derartig geformte Ausnehmungen folgen der Form der Nutkeile und unterstützen die Wirkung der konkaven Nutkeilform.

Zum Abdichten während des Vergießens kann die Dichtung an der Grenzfläche zwischen den Nutkeilen und den Polzähnen zum Beispiel in Form einer Silikon- oder Kleberaupe ausgebildet sein. Eine derartige Dichtraupe kann vor oder während der Montage der Nutkeile entweder auf die Nutkeile oder in die Ausnehmungen in den Polzähnen aufgetragen werden. Diese dichtet die Nutkeile über ihre gesamten Längsseiten ab.

In einer Ausführungsform ist die Erregerwicklung mit einer Vergussmasse umgeben. Dazu wird nach der Montage des Rotors, nach Aufbringen der Wicklungen und Montieren der Nutkeile die elektrisch isolierende Vergussmasse, beispielsweise ein Vergussharz bzw. Epoxidharz wie Araldit oder ein Kunststoff, in die Hohlräume innerhalb der Nuten des Rotors eingebracht und härtet aus. In einer Ausführungsform sind die Hohlräume innerhalb der Nuten im Wesentlichen vollständig mit einer Vergussmasse vergossen.

Bei derartigen Rotoren sind die Nutinnenkomponenten, insbesondere die Erregerwicklung, besonders gut gegen im Betrieb auftretende Fliehkräfte gesichert.

Alternativ kann die Erregerwicklung auch mit einer Tränkmasse, beispielsweise ein Tränkharz, umgeben sein. Beim Tränken wird der Rotor in die Tränkmasse getaucht und anschließend getrocknet. Dabei werden alle Nutkomponenten zusammengeklebt, der Rest der Tränkmasse tropft ab. Die Rotornuten werden dabei typischerweise nicht vollständig aufgefüllt.

Gemäß einem Aspekt der Erfindung wird ein Elektromotor mit dem beschriebenen Rotor angegeben. Der Elektromotor kann insbesondere als fremderregte Synchronmaschine ausgebildet sein. Er kann sowohl als Innen- als auch als Außenläufer ausgebildet sein.

Gemäß einem Aspekt der Erfindung wird ein Elektromotor mit dem beschriebenen Rotor angegeben. Der Elektromotor kann insbesondere als fremderregte Synchronmaschine ausgebildet sein. Er kann sowohl als Innen- als auch als Außenläufer ausgebildet sein.

Da die Nutinnenkomponenten wirksam gegen auftretende Fliehkräfte gesichert sind, kann der Elektromotor für Drehzahlen von 10 000 Umdrehungen pro Minute und mehr ausgelegt sein.

Derartige Elektromotoren eignen sich für die Verwendung in einem Kraftfahrzeug. Sie können sowohl als im Antriebsstrang vollintegrierte Antriebsmotoren als auch beispielsweise als Startergeneratoren, Radnaben- oder Achsmotoren eingesetzt werden. Gemäß einem Aspekt der Erfindung wird deshalb ein Kraftfahrzeug mit einem Antrieb angegeben, der den beschriebenen Elektromotor aufweist. Das Kraftfahrzeug kann dabei als Elektro- oder Hybridfahrzeug ausgebildet sein.

Es wird ein Verfahren zur Herstellung des Rotors angegeben, wobei das Verfahren folgende Verfahrensschritte aufweist:
- Bereitstellen eines Rotorblechpakets mit Erregerwicklungen und die Nuten abdeckenden Nutkeilen;
- Aufsetzen von Dichtkissen auf die Außenseiten der Nutkeile, wobei die Dichtkissen die Außenseiten der Nutkeile vollständig abdecken;
- Einbringen des Rotors in ein Vergusswerkzeug;
- Vergießen des Rotors;
- Entnehmen des Rotors aus dem Vergusswerkzeug und Entfernen der Dichtkissen.

Die Verwendung der Dichtkissen ermöglicht es, das Austreten von Vergussmasse aus der Schnittstelle zwischen Polzähnen und Nutkeil sicher zu verhindern. So wird auch verhindert, dass Vergussmasse auf die Oberfläche der Nutkeile gelangt. Für eine besonders gute Dichtwirkung können Dichtkissen aus einem elastischen Material, beispielsweise aus temperaturbeständigem Silikon, verwendet werden, die beim Einbringen in das Vergusswerkzeug zusammengedrückt werden.
Vorteilhafte Ausgestaltungen des oben dargestellten Rotors sind, soweit im Übrigen auf den Elektromotor beziehungsweise das Kraftfahrzeug übertragbar, auch als vorteilhafte Ausgestaltungen des Elektromotors beziehungsweise des Kraftfahrzeugs anzusehen.
- Figur 1: zeigt schematisch einen Querschnitt durch einen Elektromotor;
- Figur 2: zeigt schematisch eine perspektivische Ansicht des Elektromotors gemäß Figur 1;
- Figur 3: zeigt schematisch die Verwendung eines Dichtkissens beim Vergießen des Rotors;
- Figur 4: zeigt schematisch eine perspektivische Ansicht und einen Querschnitt durch den Rotor;
- Figur 5: zeigt schematisch einen Querschnitt des Nutkeils und
- Figur 6: zeigt schematisch einen Längsschnitt durch den erfindungsgemäßen Rotor.

Gleiche Teile sind in allen Figuren mit denselben Bezugszeichen versehen.

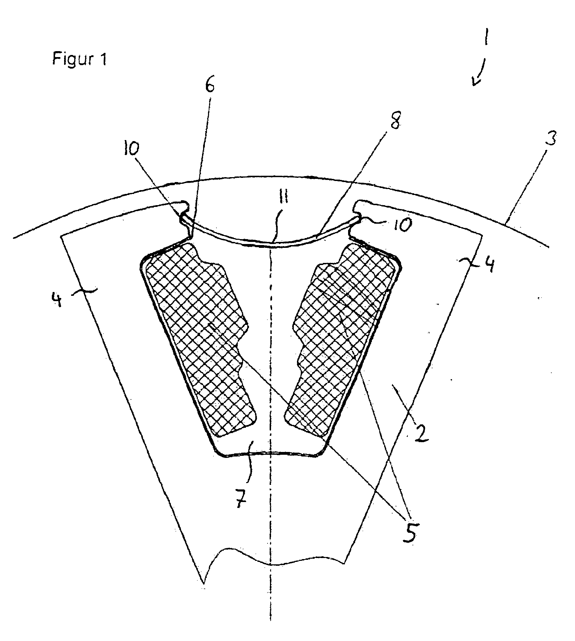

Figur 1 zeigt schematisch einen Querschnitt durch einen Elektromotor 1 mit einem als Blechpaket ausgebildeten Rotor 2 und einem den Rotor 2 umgebenden Stator 3.

Der Rotor 2 weist eine Anzahl von Polzähnen 4 auf, die durch Nuten 7 voneinander getrennt sind. Die Polzähne 4 tragen Erregerwicklungen 5, die gegen die Polzähne 4 beispielsweise durch ein Nutisolierpapier 6 elektrisch isoliert sind. Es kann auch eine andere Art der Isolierung verwendet werden, beispielsweise eine Umspritzung mit einem Kunststoff.

Die Nut 7 wird nach außen hin abgeschlossen durch einen Nutkeil 8. Der Nutkeil 8 ist aus einem nicht magnetisierbaren Material ausgebildet.

Der Nutkeil 8 weist in dieser Ausführungsform ein Material auf, das im Wesentlichen die Legierungszusammensetzung Fe_{Rest}CrₐNi_{b}Mn_{c}C_{d}SiₑP_{f}S_{g}Nₕ auf, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

Gegenüber bekannten "Nirosta"-Stählen weist dieses Material einen besonders hohen Anteil an Chrom und Nickel auf. Wie sich herausgestellt hat, bleiben Werkstücke aus diesem Stahl auch nach dem Umformen, Stanzen oder Schneiden unmagnetisierbar. Wirbelstromverluste in dem Nutkeil 8 werden somit vermieden.

Der Nutkeil 8 weist eine konkave Form auf mit einer Aufwölbung 11 zum Innern des Rotors 2 hin. Der Krümmungsradius des Nutkeils 8 ist über seinen gesamten Querschnitt konstant. Mit seinen Randbereichen ist der Nutkeil 8 in Ausnehmungen 10 in den Polzähnen 4 aufgenommen und gehaltert.

Die konkave Form des Nutkeils 8 leitet im Betrieb auftretende Fliehkräfte ab. Der Nutkeil 8 sichert damit die Nutinnenkomponenten, insbesondere die Erregerwicklungen 5, auch bei hohen Drehzahlen des Elektromotors 1 zusätzlich in der Nut 7.

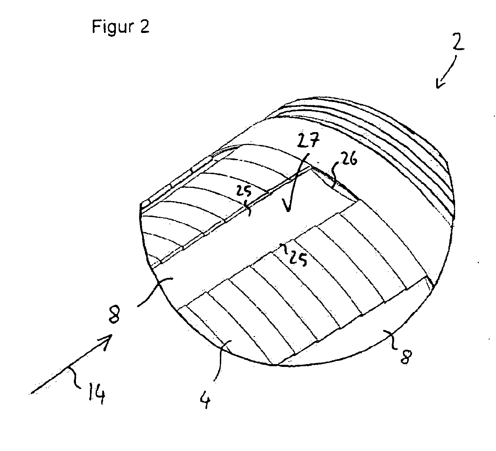

Figur 2 zeigt eine perspektivische Ansicht des Rotors 2. In dieser Ansicht sind die zwischen den Polzähnen 4 sich erstreckenden Nutkeile 8 erkennbar. Die Nutkeile 8 erstrecken sich axial, das heißt in Richtung des Pfeils 14 parallel zur Drehachse des Rotors 2, über die ganze Länge der Nut 7. Im Falle einer Nutschrägung, die häufig eingesetzt wird, um das Rastmoment von Elektromotoren zu vermindern, folgen die Nutkeile dem schrägen Verlauf der Nut 7 entsprechend.

Die Nutkeile 8 werden nach Aufbringen der Erregerwicklungen 5 montiert. Sie können sowohl axial als auch radial montiert werden. Dabei können sowohl ungebogene Bleche - beispielsweise vom Coil abgewickelt und während der Montage umgeformt - als auch bereits vor der Montage umgeformte Teile verwendet werden. Nach der Montage der Nutkeile 8 werden die verbleibenden Hohlräume der Nuten 7 mit einer nicht gezeigten Vergussmasse vergossen.

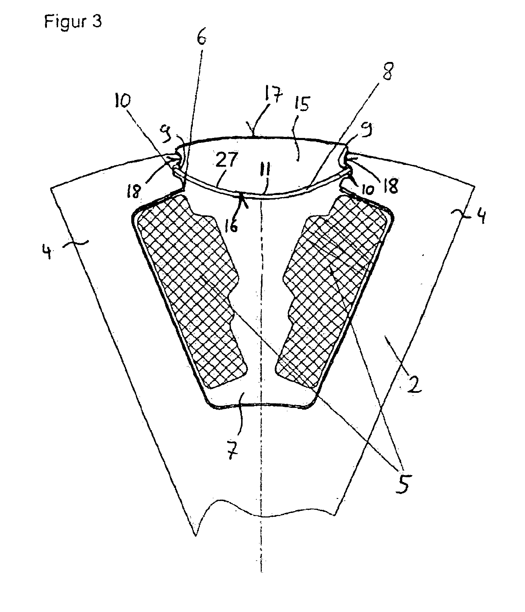

Figur 3 illustriert das Abdichten des Rotors 2 während des Vergießens. Hochdrehende Rotoren werden häufig mit einer Vergussmasse vergossen, um die Nutinnenkomponenten zu stabilisieren. Da die Rotorteile ohne Lufteinschlüsse möglichst gleichmäßig vergossen werden sollen, wird der bereits zusammengebaute Rotor 2 im Vakuum vergossen.

Im Bereich der Nutkeile 8 wird, um den Austritt von Vergussmasse zu verhindern, ein Dichtkissen 15 vorgesehen, das mit seiner Form die Kontur des Nutkeils 8 rotorseitig und eine runde Form vergusswerkzeugseitig abbildet. Das Dichtkissen 15 kann derartig geformt und dimensioniert sein, dass es in alle Richtungen abdichtet: An seiner Oberfläche 16 gegen den konkaven Nutkeil 8, an seiner Oberfläche 17 gegen das nicht gezeigte Vergusswerkzeug, an seinen Seitenflächen 18 gegen die Polzähne 4. Insbesondere kann das Dichtkissen 15 Hinterschnitte 9 aufweisen, mit denen es in der Ausnehmung 10 einrastet oder sich verklemmt.

Bedingt durch die Geometrie und die Flexibilität des Dichtkissens 15 können auf diese Weise sowohl gerade als auch geschrägte Nuten 7 abgedichtet werden.

Das Vergusswerkzeug ist in der Regel ein auf-und-zu-Werkzeug bestehend aus zwei von innen runden Dichtflächen, die nach dem Schließen des Werkzeugs einen Hohlzylinder ausbilden. Innerhalb des Hohlzylinders wird der Rotor 2 aufgenommen.

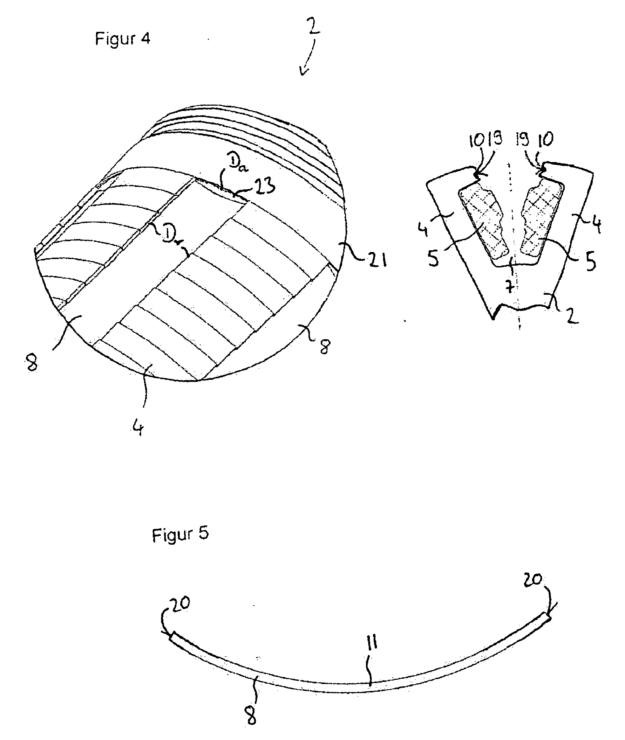

In der gezeigten Ausführungsform sind die Dichtkissen 15 nicht mit der Außenseite des Rotors 2 bündig, sondern stehen geringfügig über. Beim Schließen des Werkzeugs dichten die Dichtkissen 15 aus flexiblem Material den Bereich des Nutkeils 8 radial ab. Durch das Verpressen beim Schließen des Werkzeugs streckt sich das Dichtkissen 15 in Richtung der Längsachse des Rotors 2. So ergibt sich auch eine Dichtwirkung in axialer Richtung im Bereich der Abdeckung des Wickelkopfes 21. Die Dichtbereiche (radial und axial) sind auch in Figur 4 dargestellt.

Das Dichtkissen 15 kann auch beim Tränken verwendet werden, um einen Austritt von Tränkharz aus den Nuten 7 zu verhindern.

Figur 4 zeigt die radial abzudichtenden Bereiche Dᵣ und den axial abzudichtenden Bereich Dₐ dort, wo die drei Rotorkomponenten Rotorblechpaket, Nutkeil 8 und Abdeckung der Wickelköpfe 21 zusammentreffen. Das Abdichten dieser Bereiche verhindert den Austritt von Vergussmasse bzw. Tränkharz. Die Dichtkissen 15 werden nach dem Vergießen entfernt und können in weiteren Vergusszyklen verwendet werden.

Eine alternative Möglichkeit, den Austritt von Vergussmasse zu verhindern, die auch zusätzlich zum Dichtkissen 15 verwendet werden kann, wird nun anhand der Figuren 4 bis 6 beschrieben.
Im radialen Dichtbereich Dᵣ kann eine Dichtung 19 in der Ausnehmung 10 vorgesehen sein. Diese Dichtung 19 kann als Flüssigdichtung oder als Dichtschiene ausgebildet sein und entweder in die Ausnehmung 10 eingebracht werden oder auch als Dichtraupe auf die Seitenflächen 20 des Nutkeils 8 appliziert werden. Hierfür kann beispielsweise Silikon verwendet werden.

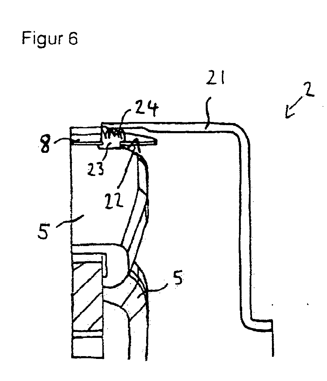

Der axial abzudichtende Bereich Dₐ kann erfindungsgemäß zusätzlich durch einen Dichtstopfen 23 abgedichtet werden, der in Figur 6 im Schnitt gezeigt ist. Der Dichtstopfen 23 ist aus einem nicht magnetisierbaren Material hergestellt, beispielsweise aus Silikon oder einem anderen Kunststoff, und kann bereits bei der Fertigung des Nutkeils 8 auf dessen Randbereich 22 aufgesteckt oder angespritzt werden. Alternativ kann er auch beim Zusammenbau des Rotors 2 mit dem Nutkeil 8 verbunden werden, entweder, indem beide Teile vormontiert und anschließend gefügt werden, oder indem der Nutkeil 8 montiert und der Dichtstopfen 23 anschließend aufgesetzt wird.

In der gezeigten Ausführungsform weist der Dichtstopfen 23 komprimierbare Lamellen 24 auf. Durch die Lamellen 24 werden die Montage- und Fertigungstoleranzen aller Bauteile im Dichtbereich Dₐ ausgeglichen.

Bei der Montage kann folgendermaßen vorgegangen werden: Zunächst werden die Nutkeile 8 mit dem Dichtstopfen 23 montiert, danach die Abdeckungen der wickelköpfe 21 aufgesetzt. Dabei werden die Lamellen 24 der Dichtstopfen 23 verpresst und legen sich so an die Dichtkontur an. Dadurch wird der abzudichtende Bereich verschlossen. Auch wenn die Lamellen 24 nicht exakt an der Abdeckung des Wickelkopfes 21 liegen sollten, so bildet sich hier zumindest eine Labyrinthdichtung. Sollte beim Vergießen oder Tränken die Vergussmasse bzw. das Tränkharz durch die ersten Lamellen 24 dringen, so wird sie durch die Labyrinthgeometrie weitgehend zurückgehalten.

Obwohl zumindest eine beispielhafte Ausführungsform in der vorhergehenden Beschreibung gezeigt wurde, können verschiedene Änderungen und Modifikationen vorgenommen werden, ohne den Schutzbereich der angefügten Ansprüche zu verlassen.

Offenbart wird zudem ein Verfahren zur Herstellung eines in der obigen Beschreibung und in Patentansprüchen beschriebenen Rotors 2, wobei das Verfahren folgende Verfahrensschritte aufweist:
- Bereitstellen eines Rotorblechpakets mit Erregerwicklungen 5 und die Nuten 7 abdeckenden Nutkeilen 8;
- Aufsetzen von Dichtkissen 15 auf die Außenseiten 27 der Nutkeile 8, wobei die Dichtkissen 15 die Außenseiten 27 der Nutkeile 8 vollständig abdecken;
- Einbringen des Rotors 2 in ein Vergusswerkzeug;
- Vergießen des Rotors 2;
- Entnehmen des Rotors 2 aus dem Vergusswerkzeug und Entfernen der Dichtkissen 15.

### Bezugszeichenliste

- 1: Elektromotor
- 2: Rotor
- 3: Stator
- 4: Polzahn
- 5: Erregerwicklung
- 6: Nutisolierpapier
- 7: Nut
- 8: Nutkeil
- 9: Hinterschnitt
- 10: Ausnehmung
- 11: Aufwölbung
- 14: Pfeil
- 15: Dichtkissen
- 16: Oberfläche
- 17: Oberfläche
- 18: Seitenfläche
- 19: Dichtung
- 20: Seitenfläche
- 21: Abdeckung des Wickelkopfes
- 22: Randbereich
- 23: Dichtstopfen
- 24: Lamellen
- 25: Längsseite
- 26: Ende
- 27: Außenseite

## Patentansprüche

1. Rotor (2) für eine rotierende elektrische Maschine, der folgendes aufweist:
- eine Anzahl von eine Erregerwicklung (5) tragenden Polzähnen (4);
- zwischen den Polzähnen (4) sind jeweils Nuten (7) gebildet;
- in den Nuten (7) sind Nutkeile (8) vorgesehen,
- wobei die Nutkeile (8) eine konkave Form mit einer zum Innern des Rotors (2) gerichteten Aufwölbung (11) aufweisen,
**dadurch gekennzeichnet, dass**
- zwischen zumindest einem Ende (26) der Nutkeile (8) und angrenzenden Rotorkomponenten ein Dichtstopfen (23) vorgesehen ist, und
- der Dichtstopfen (23) flexible Lamellen (24) aufweist.

2. Rotor (2) nach Anspruch 1,
wobei die Nutkeile (8) einen konstanten Krümmungsradius aufweisen.

3. Rotor (2) nach Anspruch 1 oder 2,
wobei die Nutkeile (8) an ihren Längsseiten (25) in den Polzähnen (4) formstabil festgeklemmt sind.

4. Rotor (2) nach Anspruch 3,
wobei die Nutkeile (8) an ihrer Längsseite (25) eine Dichtung (19) aufweist.

5. Rotor (2) nach einem der Ansprüche 1 bis 4,
wobei die Erregerwicklung (5) von einer Vergussmasse oder einer Tränkmasse umgeben ist.

6. Elektromotor (1) mit einem Rotor (2) nach einem der Ansprüche 1 bis 5.

7. Kraftfahrzeug mit einem Elektromotor (1) nach Anspruch 6.

## Claims

1. Rotor (2) for a rotating electric machine, which comprises the following:
- a number of pole teeth (4) which support an exciter winding (5);
- grooves (7) are formed between each of the pole teeth (4);
- groove wedges (8) are provided in the grooves (7),
- wherein the groove wedges (8) have a concave shape with a bulge (11) which is directed toward the interior of the rotor (2),
**characterized in that**
- a sealing plug (23) is provided between at least one end (26) of the groove wedges (8) and adjoining rotor components, and
- the sealing plug (23) has flexible lamellas (24).

2. Rotor (2) according to Claim 1,
wherein the groove wedges (8) have a constant curvature radius.

3. Rotor (2) according to Claim 1 or 2,
wherein the curve wedges (8) are clamped tight in a dimensionally stable fashion on their longitudinal sides (25) in the pole teeth (4).

4. Rotor (2) according to Claim 3,
wherein the groove wedges (8) have a seal (19) on their longitudinal side (25).

5. Rotor (2) according to one of Claims 1 to 4,
wherein the exciter winding (5) is surrounded by a casting compound or an impregnating compound.

6. Electric motor (1) having a rotor (2) according to TRG465368
one of Claims 1 to 5.

7. Motor vehicle having an electric motor (1) according to Claim 6.

## Revendications

1. Rotor (2) pour une machine électrique rotative, lequel possède les éléments suivants :
- une pluralité de dents polaires (4) supportant un enroulement excitateur (5) ;
- des rainures (7) respectivement formées entre les dents polaires (4) ;
- des cales d'encoche (8) qui se trouvent dans les rainures (7),
- les cales d'encoche (8) possédant une forme concave avec un bombement (11) dirigé vers l'intérieur du rotor (2), **caractérisé en ce que**
- un bouchon d'étanchéité (23) est présent entre au moins une extrémité (26) des cales d'encoche (8) et les composants de rotor adjacents, et
- le bouchon d'étanchéité (23) possède des lamelles flexibles (24).

2. Rotor (2) selon la revendication 1, les cales d'encoche (8) possédant un rayon de courbure constant.

3. Rotor (2) selon la revendication 1 ou 2, les cales d'encoche (8) étant serrées de manière indéformable dans les dents polaires (4) au niveau de leurs côtés longitudinaux (25).

4. Rotor (2) selon la revendication 3, les cales d'encoche (8) possédant une garniture d'étanchéité (19) sur leur côté longitudinal (25).

5. Rotor (2) selon l'une des revendications 1 à 4, l'enroulement excitateur (5) étant entouré d'une masse de scellement ou d'une matière d'imprégnation.

6. Moteur électrique (1) équipé d'un rotor (2) selon l'une des revendications 1 à 5.

7. Véhicule automobile équipé d'un moteur électrique (1) selon la revendication 6.
